# DEMANDE DE BREVET EUROPEEN

(11) **EP 2 544 010 A1**
(43) Date de publication de la demande: **09.01.2013**
(21) Numéro de dépôt: 12173987.4
(22) Date de dépôt: 28.06.2012
(51) Int. Cl.: G01P 3/44, G01M 13/04

(54) **Module de surveillance d'au moins une grandeur physique caractéristique de l'état d'un organe de guidage par contact**

(30) Priorité: 04.07.2011 FR 1155994
(71) Demandeur: NTN-SNR Roulements, 74000 Annecy (FR)
(72) Inventeur: Desbiolles, Pascal, 74570 THORENS-GLIERES (FR); Guillaume, Sébastien, 74540 GRUFFY (FR)
(74) Mandataire: Novagraaf Technologies

(57) **Abrégé**

L'invention se rapporte à un module de surveillance (10) d'au moins une grandeur physique caractéristique de l'état d'un palier (80) logé dans une boîte de palier (72). Le module comporte au moins un capteur d'état (54, 58) pour fournir un signal électrique de mesure de la grandeur physique, et un circuit électrique comportant : un circuit d'interrogation du capteur d'état relié au capteur d'état, et un circuit d'alimentation électrique du dispositif de surveillance, ainsi qu'un circuit d'économie d'énergie relié à un capteur de déplacement (58) du palier et apte à mettre le circuit d'interrogation hors veille lorsqu'une grandeur physique caractéristique du mouvement de l'organe de guidage (80) mesurée par le capteur de déplacement (58) est supérieure à une seuil prédéterminé pendant un temps prédéterminé.

## Description

### DOMAINE TECHNIQUE DE L'INVENTION

L'invention se rapporte à un module autonome de surveillance d'une grandeur physique, notamment d'une grandeur physique caractéristique de l'état d'un organe de guidage par contact. On entendra par organe de guidage par contact dans le cadre de la présente de demande tout organe de guidage par glissement ou roulement pour un guidage linéaire ou rotatif. Sont en particulier visés les paliers rotatifs lisses ou à roulements, et notamment les paliers logés dans des boîtes de palier. Sont également visés les dispositifs de guidage linéaire, notamment du type comportant un plateau circulant sur une piste linéaire par glissement un plateau équipé de galets roulant sur une piste linéaire. Sont également visés les paliers linéaires, roulements linéaires et écrous de vis à billes.

### ETAT DE LA TECHNIQUE ANTERIEURE

Dans certaines applications, notamment en matière de transports publics, de production énergétique ou industrielle, les exigences de fiabilité et de disponibilité des installations sont particulièrement sévères. Ces exigences se traduisent par un besoin de surveillance des éléments d'usure de ces installations, et notamment des paliers de guidage d'organes tournants, tels que des paliers d'arbres d'alternateurs, ou d'essieux ferroviaires.

Or ces paliers ont une durée de vie potentielle extrêmement longue avant qu'un défaut n'apparaisse, qui peut par exemple être de plusieurs milliards de tours pour un palier à roulement, mais peut se trouver réduite dans des conditions de fonctionnement sévères. Le dysfonctionnement d'un palier à roulement peut avoir diverses origines, notamment un grippage, une usure, des fissures, des ruptures de cages, la corrosion ou l'écaillage, qui est une altération des surfaces des chemins de roulement ou des corps roulants, due à la fatigue de la matière.

Dans un tel contexte, la maintenance préventive systématique qui consiste à démonter les paliers à intervalles réguliers pour en vérifier l'état présente un coût élevé d'immobilisation et une efficacité toute relative puisque la très grande majorité des paliers ainsi vérifiés sont sans défauts.

La surveillance en continu des paliers constitue donc un enjeu majeur pour la sureté de fonctionnement des installations, notamment en terme de disponibilité et de fiabilité.

Dans le document DE 10 20080 46202 est proposé un module autonome de surveillance de l'état d'un organe tournant, mettant à profit la production thermique de l'organe tournant pour alimenter le circuit électrique du module de surveillance via un convertisseur thermoélectrique. Suivant un mode de réalisation, le convertisseur thermoélectrique et son radiateur associé sont embarqués sur l'organe tournant, la rotation de l'organe assurant un flux d'air de refroidissement du radiateur. Suivant un deuxième mode de réalisation, le convertisseur thermoélectrique et son radiateur sont fixes, le dispositif comportant en outre un ventilateur associé à l'organe tournant pour générer un courant d'air forcé au niveau du radiateur. Ce dispositif n'est toutefois pas adapté à la surveillance d'un palier logé dans une boîte de palier, telle qu'une boîte d'essieu ou une boîte de transmission, à l'intérieur de laquelle on n'observe pas de gradient thermique suffisant.

Dans le document DE 10 2007 017 461 est décrit un module autonome d'alimentation d'un circuit électrique, incluant un générateur thermoélectrique tirant profit d'un flux de chaleur disponible dans l'environnement du circuit électrique pour générer par effet Seebeck une tension électrique. Le module est en outre pourvu d'un circuit de stabilisation de la tension en sortie du générateur thermoélectrique. Aucune disposition n'est prise pour intégrer ce module dans un boîtier permettant une utilisation in situ. Le module n'est donc pas utilisable dans un environnement sévère.

Dans le document DE 10 2007 056 150 est décrit un module autonome de mesure d'une grandeur physique présente dans un milieu délimité par une paroi présentant un trou, comportant un capteur pour mesurer la grandeur physique en question, un convertisseur thermoélectrique pour alimenter le capteur, un radiateur lié au convertisseur thermoélectrique et une vis destinée à pénétrer dans le trou de la paroi de façon à permettre la mesure de la grandeur physique par le capteur, la vis constituant un conducteur thermique entre le milieu et l'extérieur via le convertisseur thermoélectrique et le radiateur. Il est par ailleurs envisagé des moyens de transmission sans fil des mesures. Ce dispositif expérimental s'avère toutefois peu exploitable dans un environnement industriel sévère.

Un constat similaire peut être fait concernant la surveillance de l'état d'organes de guidage linéaire, et notamment des dispositifs de guidage par galets ou par patins à billes.

### EXPOSE DE L'INVENTION

L'invention vise à remédier à tout ou partie des inconvénients de l'état de la technique identifiés ci-dessus, et notamment à proposer des moyens pour permettre une surveillance d'un organe de guidage par contact et notamment d'un palier logé dans une boîte de palier ou d'un dispositif de guidage linéaire, à coût énergétique minimal, et de préférence sans liaison filaire extérieure, et sans modifier notablement la boîte de palier ou le dispositif de guidage linéaire.

Selon un aspect de l'invention, celle-ci a trait à une boîte de palier comportant un corps de boîte de palier définissant une cavité pour loger un palier pour le guidage d'un organe tournant, notamment une fusée d'essieu, un couvercle de boîte de palier fermant la cavité, et un capteur d'émission acoustique fixé à l'extérieur de la boîte de palier et présentant une face de couplage acoustique couplée mécaniquement à une face extérieure d'une paroi de la boîte de palier de telle manière que le capteur d'émission acoustique est apte à détecter les ondes élastiques transitoires résultant de micro-déplacements locaux internes du palier et se propageant jusqu'à la paroi.

Le positionnement du capteur sur une paroi extérieure de la boîte d'essieu permet d'envisager un montage non intrusif sur des modèles de boîtes de palier préexistants, ce qui permet d'éviter une requalification de la boîte de palier. Pour mémoire, la qualification d'une boîte de palier, notamment dans les domaines techniques où la sûreté des installations est essentielle, comme par exemple pour les applications ferroviaires ou électronucléaires, nécessite de longs et nombreux essais sur banc en charge. Le positionnement du capteur permet en outre d'envisager une monte en rénovation, sur des boîtes de palier préexistantes.

C'est l'expérience qui a révélé que contre toute attente un capteur d'émission acoustique est en mesure de donner un signal représentatif de l'état du palier, même s'il est disposé à distance de celui-ci sur une face de la boîte de palier opposée à la cavité ou est logé le palier.

Ce type de capteur a une faible consommation énergétique, et est donc particulièrement adapté à l'instrumentation d'une boîte de palier sans liaison électrique filaire avec l'extérieur. Le traitement du signal issu d'un tel capteur peut également être simple, donc faiblement consommateur d'énergie.

Dans de nombreuses applications, on constate que l'élément fixe du palier, qui est solidarisé à la boîte d'essieu et qu'on appellera dans la suite de manière générique bague fixe, n'est pas sollicité uniformément autour de l'axe de rotation du palier, mais qu'au contraire l'essentiel de la charge porte sur un secteur angulaire restreint autour de l'axe de rotation du palier, par exemple sur un secteur de moins de 180° et en pratique de moins de 120°. En général, ce constat est fait pour des applications dans lesquelles l'axe de rotation du palier est horizontal ou plus généralement incliné avec l'axe vertical déterminant la direction de la pesanteur. Ce sera le cas par exemple pour une boîte d'essieu, le secteur angulaire étant alors généralement ouvert vers le haut et correspondant à la partie de la bague extérieure du palier sur laquelle porte l'essentiel du poids du véhicule. Ce sera également le cas pour un palier primaire d'arbre d'éolienne, le secteur angulaire pouvant alors être tourné vers le bas et correspondre à la zone portant l'essentiel du poids de l'équipage tournant constitué par l'arbre primaire et l'hélice de l'éolienne. Dans de telles circonstances, on aura intérêt à prévoir que la paroi de couplage acoustique soit localisée dans le même secteur angulaire que la zone de charge, si possible à proximité immédiate de la partie de la bague fixe correspondant à la zone de charge.

Selon une mode de réalisation préféré, le capteur d'émission acoustique comporte un transducteur piézoélectrique, particulièrement adapté pour une minimisation de la consommation électrique, tant par le capteur lui-même que dans le traitement ultérieur du signal. En effet, un tel capteur présente un excellent rapport signal sur bruit, qui autorise une moindre amplification du signal.

Le capteur d'émission acoustique peut être intégré à un module de surveillance comportant un circuit électrique de traitement d'un signal d'émission acoustique émis par le capteur d'émission acoustique pour comparer le signal d'émission acoustique à une signature caractéristique du palier et émettre un signal de diagnostic du palier.

Le module peut avantageusement comporter un boîtier étanche de protection du capteur d'émission acoustique et du circuit électrique, comportant au moins une interface mécanique de fixation à la boîte de palier.

Ce module de surveillance peut comporter en outre un capteur de température et/ou un capteur de vitesse de rotation du palier relié(s) au circuit électrique de traitement, le signal de diagnostic du palier étant fonction de la température et/ou de la vitesse mesurée(s). En particulier, la signature caractéristique du palier peut dépendre de la température mesurée par le capteur de température et/ou de la vitesse mesurée par le capteur de vitesse.

Le module de surveillance peut comporter en outre un circuit d'alimentation électrique relié au circuit de traitement et au circuit de transmission. Ces circuits sont avantageusement intégrés dans le boîtier étanche du module de surveillance. Suivant un mode de réalisation préféré mettant à profit la chaleur dissipée par la rotation du palier, le module de surveillance peut également comporter :
- un convertisseur thermoélectrique intégré au circuit d'alimentation électrique,
- une semelle de canalisation d'un flux thermique transitant de l'intérieur de la boîte de palier au convertisseur thermoélectrique,
- un radiateur de refroidissement positionné de sorte à faire saillie à l'extérieur de la boîte de palier pour évacuer un flux thermique transitant par conduction thermique du convertisseur thermoélectrique à l'extérieur,
- au moins un joint thermique d'isolation pour isoler de la semelle le radiateur de refroidissement.

On réalise ainsi une alimentation autonome de l'instrumentation de la boîte de palier, c'est-à-dire sans liaison filaire d'alimentation électrique de l'extérieur.

La semelle sera de préférence en contact avec une paroi de couplage thermique de la boîte de palier. Le capteur d'émission acoustique peut être directement couplé à la semelle, qui dans ce cas présente une double fonction d'interface mécanique de couplage entre le capteur d'émission acoustique et la paroi de la boîte de palier, et de conduction de la chaleur.

Selon un mode de réalisation, le boîtier d'instrumentation sert à loger à la fois le capteur d'émission acoustique, le circuit de traitement, le convertisseur thermoélectrique, et le cas échéant une partie au moins du circuit de transmission. Ce boîtier d'instrumentation peut au moins partiellement être constitué par le radiateur, la semelle et le joint thermique.

Dans le cas où un capteur thermométrique est utilisé, celui-ci peut avantageusement être disposé sur la semelle. Le cas échéant, on peut prévoir que la boîte de palier soit pourvue d'une traversée pour que la semelle pénètre à l'intérieur de la cavité de logement du palier.

Le boîtier d'instrumentation peut en outre comporter un corps formant avec la semelle et le radiateur de refroidissement une ou plusieurs cavités hermétiquement fermées de logement du convertisseur thermoélectrique et du capteur d'émission acoustique. Selon un mode de réalisation préféré, le capteur d'émission acoustique est couplé au corps du boîtier d'instrumentation, qui présente la face d'accouplement acoustique avec la paroi de la boîte de palier, pour transmettre au capteur d'émission acoustique les ondes élastiques transitoires résultant de micro-déplacements locaux internes du palier. La semelle comporte de son côté une paroi d'interface thermique avec la boîte de palier, destinée à venir au contact d'une face extérieure chaude du couvercle ou du corps de la boîte de palier. Cette paroi d'interface thermique est de préférence perpendiculaire à la face d'accouplement acoustique du corps du boîtier. Cette disposition permet d'assurer un bon contact d'une part entre semelle et boîte de palier pour transmettre la chaleur au convertisseur thermoélectrique, et d'autre part entre la paroi de la boîte de palier et la face de couplage acoustique.

Le couvercle de boîte de palier peut avantageusement comporter un logement ouvert sur l'extérieur dans lequel vient se loger au moins une partie du boîtier, le logement présentant au moins deux faces perpendiculaires constituées par la face extérieure de la paroi de couplage thermique et la face extérieure de la paroi de couplage acoustique.

Le joint d'isolation thermique est préférentiellement disposé entre le corps et le radiateur de refroidissement ou entre le corps et la semelle. Le corps peut lui-même être constitué en matériau thermiquement isolant, de façon à constituer tout ou partie du joint d'isolation. Par matériau isolant, on entend ici un matériau donc la conductivité thermique est au moins cinq fois inférieure, et de préférence au moins dix fois inférieure à la conductivité thermique des matériaux constitutifs de la semelle et du radiateur.

On pourra par exemple retenir comme matériau constitutif du corps du boîtier d'instrumentation un acier inoxydable, ayant une conductivité thermique de l'ordre de 26 Wm⁻¹K⁻¹, la semelle étant en cuivre avec une conductivité de l'ordre de 390 Wm⁻¹K⁻¹ et un radiateur en aluminium, présentant une conductivité thermique de l'ordre de 230 Wm⁻¹K⁻¹.

Si l'on choisit pour la semelle un matériau oxydable dans les conditions prévues d'utilisation, par exemple du cuivre, on aura intérêt à ce que la semelle soit entièrement protégée de l'air ambiant ou plus généralement du milieu extérieur. On prévoit ainsi que le corps du boîtier d'instrumentation enveloppe la semelle sur toutes les faces autres que celle en contact avec la paroi de la boîte de palier constituant la source chaude, par exemple la paroi de couplage. De plus, on peut prévoir un joint d'étanchéité, si possible isolant thermique, disposé entre le corps du boîtier d'instrumentation et la boîte de palier, pour protéger la semelle du milieu extérieur hostile. Le corps du boîtier d'instrumentation est alors de préférence inoxydable, ou du moins inoxydable en profondeur, dans les conditions d'utilisation ambiantes prévues, notamment dans l'air entre -40 et +150°C.

Le module peut comporter en outre au moins un coussin d'adaptation en matériau conducteur thermique déformable, disposé entre le radiateur de refroidissement et le convertisseur thermoélectrique ou entre le convertisseur thermoélectrique et la semelle, voire deux coussins de part et d'autre du convertisseur thermoélectrique, de sorte que le convertisseur thermoélectrique, pris en sandwich entre le radiateur et la semelle, soit pincé avec une pression de contact maîtrisée, malgré d'éventuelles tolérances dimensionnelles de fabrication ou de montage des pièces.

La présence de tels coussins permet, lors de la conception et de la réalisation du module, de découpler le dimensionnement des pièces du boîtier d'instrumentation devant assurer sa tenue mécanique dans un milieu vibratoire hostile, et celui des pièces devant assurer une bonne conduction thermique et/ou acoustique.

On choisira pour coussin un matériau présentant de préférence une très faible impédance thermique de contact. En considérant que la semelle, l'éventuel coussin entre semelle et convertisseur thermoélectrique, le convertisseur thermoélectrique lui-même, l'éventuel coussin entre convertisseur thermoélectrique et radiateur et le radiateur sont disposés thermiquement en série entre la source chaude constituée par la paroi de la boîte de palier et la source froide constituée par l'air ambiant, et en considérant que chacun de ces éléments a une impédance thermique, on retiendra de préférence pour le ou les coussins d'adaptation des matériaux dont l'impédance thermique soit inférieure à celle du radiateur, et de préférence inférieure à celle de la semelle.

On pourra notamment choisir pour coussin d'adaptation une feuille d'élastomère souple chargé en particules métalliques. On pourra également choisir une graisse thermo-conductrice chargée en particules métalliques.

On préférera un coussin apte à se déformer en compression de manière élastique et/ou plastique pour absorber une course supérieure à la tolérance maximale de positionnement entre le radiateur et la semelle et aux mouvements relatifs induits par les dilatations différentielles des matériaux en cas de fluctuations thermiques. De bons résultats ont été obtenus avec une feuille de polymère de 0,5 mm à 5 mm chargé en fibres de verre, présentant un module d'Young compris entre 60 et 180 kPa, et une dureté Shore 00 de 35 mesurée suivant la norme ASTM D2240-02.

Selon un mode de réalisation, le module de surveillance comporte en outre une antenne de transmission radioélectrique et un circuit électrique de transmission relié à l'antenne. Cette antenne peut être logée dans une cavité du radiateur de refroidissement fermée par un couvercle en matériaux transparent aux ondes électromagnétiques au moins dans un domaine de fréquences correspondant à un gain maximal de l'antenne. Ainsi l'antenne est-elle protégée, notamment si le module se trouve dans un milieu hostile tel qu'un bogie de véhicule ferroviaire.

Selon un autre aspect de l'invention, celle-ci a trait à un procédé de surveillance de l'état d'usure d'un palier disposé dans une boîte de palier comportant un corps de boîte dans lequel est logé le palier et un couvercle de boîte fermant le corps de boîte, procédé suivant lequel on couple un capteur d'émission acoustique à une paroi extérieure de la boîte pour mesurer des ondes élastiques transitoires résultant de micro-déplacements locaux internes du palier et se propageant jusqu'à la paroi extérieure.

On peut avantageusement comparer les ondes élastiques mesurées à une signature caractéristique du palier pour procéder à un diagnostic de l'état du palier.

On peut également mesurer une température à l'intérieur de la boîte, et procéder au diagnostic de l'état du palier en fonction des ondes élastiques et de la température mesurées.

On peut également mesurer une vitesse de rotation du palier, et cesser de procéder au diagnostic de l'état du palier lorsque la vitesse de rotation du palier reste inférieure à un seuil prédéterminé pendant un temps donné.

Selon un autre aspect de l'invention, celle-ci vise à proposer un module de surveillance autonome utilisant exclusivement l'énergie disponible dans l'environnement direct d'un organe de guidage rotatif ou linéaire par contact tel qu'un palier à roulement ou un palier lisse, un dispositif de guidage linéaire par galets ou par patins à billes ou à rouleaux, pour surveiller l'état de l'organe de guidage. Plus spécifiquement est proposé un module de surveillance d'au moins une grandeur physique caractéristique de l'état d'un organe de guidage par contact, comportant :
- au moins un capteur d'état pour fournir un signal électrique de mesure de la grandeur physique,
- un circuit électrique comportant :
   - un circuit d'interrogation du capteur d'état relié au capteur d'état,
   - un circuit d'alimentation électrique du dispositif de surveillance,
- un convertisseur thermoélectrique intégré au circuit d'alimentation électrique,
- une semelle de canalisation d'un flux thermique transitant depuis l'organe de guidage jusqu'au convertisseur thermoélectrique,
- un radiateur de refroidissement pour évacuer un flux thermique transitant par conduction thermique du convertisseur thermoélectrique à l'extérieur,
- au moins un joint thermique d'isolation pour isoler de la semelle le radiateur de refroidissement.

Ainsi est mise à profit l'énergie thermique générée par l'organe de guidage, énergie qui, transportée par le flux thermique canalisé par la semelle, est transformée par le convertisseur thermoélectrique qui dispose d'une source froide grâce au radiateur de refroidissement.

Préférentiellement, le module comporte un boîtier d'instrumentation pour loger le circuit électrique au moins partiellement constitué par le radiateur, la semelle et le joint thermique, le boîtier d'instrumentation comportant au moins une interface mécanique de fixation à un support lié à l'organe de guidage. On dispose ainsi d'un sous-ensemble unitaire qui peut être monté sur le support lié à l'organe de guidage. Ce support peut par exemple être une boîte de palier, par exemple une boîte d'essieu, une boîte de transmission, un carter moteur ou une boîte de palier d'éolienne. Le support peut également être constitué par un plateau mobile d'un système de guidage linéaire, ce plateau étant pourvu de galets ou d'un circuit de circulation de billes roulant sur une piste de guidage fixe.

Dans le cas où le support est une boîte de logement du palier, la semelle peut être prévue pour venir en contact direct avec une paroi extérieure de cette boîte, ou pour pénétrer à l'intérieur de la boîte. La première solution sera préférée dans toutes les situations où la boîte de palier préexiste et est équipée a posteriori avec le module.

Selon un mode de réalisation préféré, le boîtier d'instrumentation comporte en outre un corps interposé entre la semelle et le radiateur et formant avec la semelle et le radiateur une cavité de logement du convertisseur thermoélectrique. Le ou les joints d'isolation thermique peuvent alors être disposés entre le corps et le radiateur de refroidissement et/ou entre le corps et la semelle. Le matériau constitutif du corps peut être un isolant thermique, de sorte que le corps constitue lui-même le joint d'isolation thermique ou une partie de celui-ci. Par matériau isolant, on entend ici, comme indiqué précédemment, un matériau donc la conductivité thermique est au moins cinq fois inférieure, et de préférence au moins dix fois inférieure à la conductivité thermique des matériaux constitutifs de la semelle et du radiateur.

Si l'on choisit pour la semelle un matériau oxydable dans les conditions prévues d'utilisation, par exemple du cuivre, on aura intérêt à ce que la semelle soit entièrement protégée de l'air ambiant ou plus généralement du milieu extérieur. On prévoit ainsi que le corps du boîtier d'instrumentation du module de surveillance enveloppe la semelle sur toutes les faces autres que celle en contact avec la paroi de la boîte de palier constituant la source chaude, par exemple la paroi de couplage. De plus, on peut prévoir un joint d'étanchéité, si possible isolant thermique, disposé entre le corps du boîtier d'instrumentation et la boîte de palier et entourant la semelle, pour protéger la semelle du milieu extérieur hostile.

Le convertisseur thermoélectrique est pris en sandwich entre la semelle et le radiateur. Pour assurer une bonne pression de contact entre ces éléments et faciliter le montage du module, ce dernier peut avantageusement être pourvu d'au moins un coussin d'adaptation en matériau conducteur thermique déformable, disposé entre le radiateur de refroidissement et le convertisseur thermoélectrique et/ou entre le convertisseur thermoélectrique et la semelle.

Selon un mode de réalisation préféré, le circuit électrique comporte en outre une antenne de transmission radioélectrique reliée à un circuit électrique de transmission. Pour la protéger dans un environnement hostile, l'antenne peut notamment être logée dans une cavité du radiateur de refroidissement fermée par un couvercle en matériau transparent aux ondes électromagnétiques au moins dans un domaine de fréquences correspondant à un gain maximal de l'antenne.

Avantageusement, le circuit électrique peut comporter un circuit d'économie d'énergie relié à un capteur de déplacement de l'organe de guidage et apte à mettre le circuit d'interrogation hors veille lorsqu'un signal du capteur de rotation du palier dépasse un seuil prédéterminé pendant un temps donné. Ce capteur de déplacement ou de mouvement peut mesurer une vitesse de déplacement de l'organe de guidage ou tout autre grandeur physique représentative du mouvement de l'organe de guidage, par exemple une vibration mesurée par un accéléromètre, une émission acoustique mesurée par un capteur piézo-électrique haute fréquence, une température. On s'attachera dans tous les cas à utiliser l'énergie électrique du signal émis par le capteur de rotation pour alimenter le circuit d'économie d'énergie et provoquer l'éveil du circuit d'alimentation électrique.

Suivant un mode de réalisation, le convertisseur thermoélectrique présente une face chaude tournée vers la semelle et une face froide opposée à la face chaude et tournée vers le radiateur de refroidissement. On assure donc le transfert thermique entre la semelle et le radiateur par conduction au travers du convertisseur thermoélectrique. Dans le cas où plusieurs convertisseurs thermoélectriques sont nécessaires, ceux-ci peuvent être disposés thermiquement en série ou en parallèle les uns avec les autres, entre la semelle et le radiateur.

Le radiateur de refroidissement est préférentiellement réalisé en un matériau métallique, par exemple un alliage d'aluminium. La semelle est également réalisée de préférence en un matériau métallique, par exemple un alliage de cuivre. Le corps peut quant à lui être réalisé en acier inoxydable.

Selon un mode de réalisation préféré, le circuit d'alimentation électrique comporte un accumulateur électrochimique, rechargé par le convertisseur thermoélectrique. L'accumulateur électrochimique est de préférence disposé en appui sur le radiateur de refroidissement ou sur un coussin d'adaptation en matériau souple et bon conducteur thermique, l'objectif étant ici de refroidir autant que possible l'accumulateur électrochimique, dont les performances peuvent s'altérer en cas de température trop élevée.

La ou les grandeurs physiques, incluent au moins l'émission acoustique du palier, la température du palier ou la vibration du palier. De préférence, la température est utilisée en combinaison avec l'une des deux autres grandeurs pour déterminer l'état du palier.

Selon un autre aspect de l'invention, celle-ci a trait à une boîte de palier comportant :
- un corps de boîte délimitant une cavité pour loger un palier pour le guidage d'un organe tournant, et
- un couvercle de boîte fermant la cavité,
- un module de surveillance tel que décrit précédemment, pour la surveillance d'au moins une grandeur physique caractéristique de l'état du palier, la semelle du module de surveillance étant en contact et en appui contre une paroi du corps de boîte ou du couvercle de boîte, ou traversant une ouverture d'une telle paroi.

Selon une application particulière, la boîte de palier est une boîte d'essieu logeant une fusée d'essieu, le radiateur de refroidissement comportant des ailettes planes parallèles à un axe horizontal perpendiculaire à l'axe de rotation du palier.

Selon une autre application, la boîte de palier est une boîte de palier d'éolienne logeant un axe d'hélice d'éolienne, le radiateur de refroidissement comportant de préférence des ailettes planes disposées parallèlement à la direction du flux d'air.

Le palier peut notamment être un palier à roulement ou un palier lisse.

On peut avantageusement prévoir que le corps de boîte ou le couvercle de boîte présente une cavité ouverte vers l'extérieur de la boîte et constituant un logement pour le module de surveillance, le radiateur faisant saillie hors de la cavité vers l'extérieur. De préférence, cette cavité présente une paroi latérale perpendiculaire à un axe de rotation du palier et constituant la paroi de couplage thermique. Cette paroi de couplage est de préférence dans la zone de charge du palier, qui correspond également à la zone de dissipation thermique maximale.

Selon un autre aspect de l'invention, celle-ci a trait à un procédé d'alimentation électrique d'un module de surveillance d'au moins une grandeur physique caractéristique de l'état d'un palier logé dans une boîte de palier, procédé suivant lequel :
- on transfère de la chaleur par conduction thermique depuis l'intérieur de la boîte de palier jusqu'à une face chaude d'un convertisseur thermoélectrique situé à l'extérieur de la boîte de palier ;
- on transfère de la chaleur par conduction thermique depuis une face froide du convertisseur thermoélectrique jusqu'à un radiateur de refroidissement thermiquement isolé par rapport à la boîte de palier et situé dans un flux d'air ambiant forcé ;
- on charge un accumulateur électrochimique avec le convertisseur thermoélectrique,
- on alimente avec le convertisseur thermoélectrique et/ou l'accumulateur électrochimique un circuit d'interrogation d'un capteur de mesure de la grandeur physique.

Un adaptateur de tension peut être interposé entre le convertisseur thermoélectrique et l'accumulateur.

Préférentiellement, on alimente avec le convertisseur thermoélectrique et/ou l'accumulateur électrochimique un circuit de transmission relié à une antenne radio-électrique.

Pour limiter la consommation, on peut prévoir de cesser d'alimenter au moins le circuit d'interrogation lorsque la vitesse de rotation du palier est inférieure à un seuil prédéterminé pendant un temps prédéterminé.

Selon un autre aspect de l'invention est proposé un module de surveillance d'au moins une grandeur physique caractéristique de l'état d'un organe de guidage par contact, comportant :
- au moins un capteur d'état pour fournir un signal électrique de mesure de la grandeur physique,
- un circuit électrique comportant :
- un circuit d'interrogation du capteur d'état relié au capteur d'état,
- un circuit d'alimentation électrique du dispositif de surveillance, et
- un circuit d'économie d'énergie relié à un capteur de déplacement de l'organe de guidage par contact et apte à mettre le circuit d'interrogation hors veille lorsqu'une grandeur physique caractéristique du mouvement de l'organe de guidage par contact mesurée par le capteur de déplacement de l'organe de guidage par contact est supérieure à une seuil prédéterminé pendant un temps prédéterminé.

Le circuit d'économie d'énergie permet de définir une stratégie optimale d'alimentation du circuit d'interrogation du capteur d'état minimisant l'énergie nécessaire au module, ce qui permet le cas échéant de rendre le module autonome, au sens où il ne nécessite pas d'alimentation électrique extérieure.

Le module de surveillance est particulièrement adapté à la surveillance d'un palier. La grandeur physique caractéristique de la rotation du palier peut être la vitesse de rotation du palier mesurée de façon classique par un capteur de vitesse, la température dans la boîte de palier ou sur une paroi extérieure de la boîte de palier, mesurée par un capteur de température, une vibration de la boîte de palier ou du palier, mesurée par un capteur accélérométrique sensible notamment dans un domaine fréquentiel inférieur à 20kHz et de préférence inférieur à 100 Hz ou une émission acoustique. De manière analogue, dans le cas de la surveillance d'un organe de guidage linéaire, la grandeur physique caractéristique du mouvement linéaire peut être la vitesse d'un plateau du système de guidage linéaire, mesuré de façon classique par un capteur de vitesse, la température du plateau ou d'un rail de guidage sur lequel le plateau se déplace, mesurée par un capteur de température, une vibration du plateau, mesurée par un capteur accélérométrique sensible notamment dans un domaine fréquentiel inférieur à 20 kHz et de préférence inférieur à 100 Hz ou une émission acoustique.

On peut choisir un éveil immédiat du circuit d'interrogation dès dépassement du seuil, auquel cas, le temps d'attente est nul.

La mise en veille du circuit peut avoir lieu automatiquement à la fin d'un cycle de mesure, ou lorsque la grandeur physique caractéristique de l'état de l'organe de guidage mesurée par le capteur d'état passe en-deçà d'un seuil prédéterminé, ou bien encore lorsque la grandeur caractéristique du mouvement de l'organe de guidage, mesurée par le capteur de mouvement de l'organe de guidage, passe en-deçà d'un seuil prédéterminé pendant un temps prédéterminé.

Selon un mode de réalisation préféré, le circuit d'alimentation électrique comporte un accumulateur électrochimique.

Le circuit d'alimentation électrique peut comporter au moins un transducteur apte à transformer en énergie électrique une énergie cinétique et/ou thermique émise par l'organe de guidage. Le ou les transducteurs peuvent notamment inclure un convertisseur thermoélectrique tel que décrit précédemment en liaison avec d'autres aspects de l'invention, et par exemple un convertisseur thermoélectrique présentant une face chaude reliée par conduction thermique à une semelle du module en contact avec une paroi de l'organe de guidage ou traversant une paroi d'un boîtier de l'organe de guidage et une face froide reliée par conduction thermique à un radiateur de refroidissement, de préférence positionné dans un flux d'air.

Suivant un mode de réalisation préféré, l'organe de guidage par contact est un palier logé dans une boîte de palier. Le ou les transducteurs incluent au moins un convertisseur thermoélectrique présentant d'une part une face chaude reliée par conduction thermique à une semelle du module de surveillance en contact avec une paroi de la boîte de palier ou traversant une paroi de la boîte de palier et plongée à l'intérieur de la boîte de palier et d'autre part une face froide reliée par conduction thermique à un radiateur de refroidissement.

On peut également envisager que le capteur de mouvement de l'organe de guidage soit relié au circuit d'alimentation de telle manière que lorsque l'organe de guidage tourne, le capteur de mouvement de l'organe de guidage génère un signal qui alimente en énergie le circuit d'alimentation. On obtient ainsi une source d'énergie utilisable à titre principal ou auxiliaire, par exemple en complément d'un convertisseur thermoélectrique. Ceci sera possible en particulier avec un capteur de vitesse électromagnétique passif polarisé du type à bobine et roue phonique ou codeur magnétique.

Le module de surveillance peut comporter en outre une antenne de transmission radioélectrique et un circuit de transmission relié à l'antenne. Toujours dans un soucis de maîtrise de l'énergie, on peut prévoir que le circuit de transmission soit apte à être alimenté par l'antenne, lorsque celle-ci est placée dans un champ électromagnétique d'un dispositif émetteur-récepteur distant. Dans une telle configuration, le circuit de transmission peut limiter son recours au circuit d'alimentation lors des phases de transmission, ce qui est particulièrement avantageux notamment si les phases de transmission ont lieu à l'arrêt, par exemple dans une phase de maintenance, où le palier n'émet pas de chaleur et ne tourne pas.

Par ailleurs, toujours dans un soucis de minimisation des besoins énergétiques et de maximisation de l'autonomie du module de surveillance, on peut prévoir que le capteur d'état soit un capteur d'émission acoustique apte à détecter les ondes élastiques transitoires résultant de micro-déplacements locaux internes à l'organe de guidage. En effet, un tel capteur est peu consommateur d'énergie et ne nécessite pas de traitements du signal sophistiqué, eux-mêmes consommateurs d'énergie. D'autres capteurs d'état peuvent toutefois être envisagés, par exemple un capteur de température ou un capteur accélérométrique.

Selon un autre aspect de l'invention celle-ci a trait à une boîte de palier, notamment boîte d'essieu, comportant :
- un corps de boîte de palier définissant une cavité pour loger un palier pour le guidage d'un organe tournant, notamment une fusée d'essieu, et
- un couvercle de boîte de palier fermant la cavité,
- un module de surveillance tel que décrit précédemment, pour la surveillance d'au moins une grandeur physique caractéristique de l'état du palier.

Le capteur d'état est de préférence est disposé à l'extérieur de la boîte de palier, de préférence dans un boîtier dédié fixé à la boîte de palier. Le capteur de rotation du palier peut être disposé à l'extérieur de la boîte de palier (par exemple s'il s'agit d'un capteur thermométrique ou accélérométrique). Il peut également pénétrer à l'intérieur de la cavité par une ouverture d'une paroi du corps de boîte de palier ou du couvercle de boîte de palier.

Selon un autre aspect de l'invention celle-ci a trait à un couvercle de boîte de palier, notamment de boîte d'essieu, comportant :
- des moyens de fixation à un corps de la boîte de palier, et
- un module de surveillance tel que décrit précédemment, pour la surveillance d'au moins une grandeur physique caractéristique de l'état du palier, la semelle du module de surveillance étant en contact et en appui contre une paroi de couplage thermique et/ou acoustique du couvercle de boîte de palier, ou traversant une ouverture d'une paroi du couvercle de boîte de palier.

Cette solution est particulièrement adaptée à un contexte de rénovation de matériel existant, la seule pièce existante de la boîte de palier devant être modifiée étant le couvercle, ce qui ne nécessite pas de requalification de l'ensemble de la boîte.

Selon un autre aspect de l'invention, celle-ci a trait à un procédé de gestion de l'alimentation électrique d'un module de surveillance d'au moins une grandeur physique caractéristique de l'état d'un palier logé dans une boîte de palier, procédé suivant lequel :
- on charge un accumulateur électrochimique avec au moins un générateur thermoélectrique,
- on alimente un circuit d'interrogation d'un capteur d'état pour mesurer la grandeur physique lorsque la vitesse de rotation du palier est supérieure un premier seuil prédéterminé ;
- on cesse d'alimenter au moins le circuit d'interrogation lorsque la vitesse de rotation du palier est inférieure à un deuxième seuil prédéterminé pendant un temps donné.

Comme expliqué précédemment, cette mesure d'économie d'énergie permet une plus grande autonomie du module de surveillance.

### BREVE DESCRIPTION DES FIGURES

D'autres caractéristiques et avantages de l'invention ressortiront à la lecture de la description qui suit, en référence aux figures annexées, qui illustrent :
- la figure 1, un schéma de principe d'un module de surveillance selon un mode de réalisation de l'invention ;
- la figure 2, une vue en coupe d'un module de surveillance selon un mode de réalisation de l'invention ;
- la figure 3, une vue en coupe du module de surveillance de la figure 2 suivant un plan de coupe parallèle à celui de la figure 2 ;
- la figure 4, une vue éclatée du module de surveillance de la figure 2;
- la figure 5, une vue en coupe d'une boîte de palier, ici une boîte d'essieu, incorporant le module de surveillance de la figure 2 ;
- la figure 6, une vue en coupe d'un module selon une variante de réalisation.

Pour plus de clarté, les éléments identiques ou similaires sont repérés par des signes de référence identiques sur l'ensemble des figures.

### DESCRIPTION DETAILLEE D'UN MODE DE REALISATION

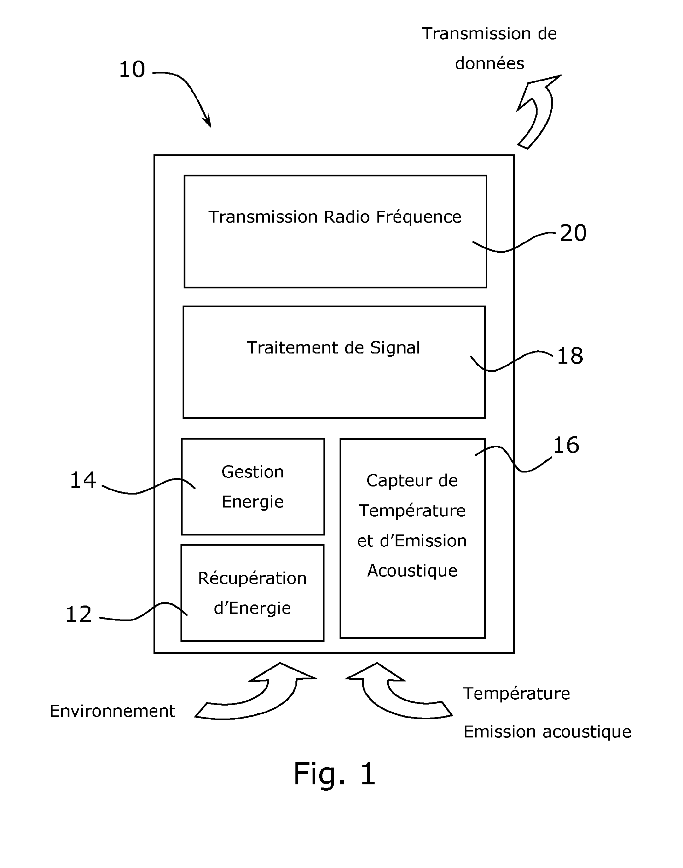

Sur la figure 1 est illustré de manière schématique un module de surveillance 10 d'un palier rotatif, composé de plusieurs briques technologiques, à savoir une brique 12 de récupération d'énergie issue de l'environnement, une brique de gestion et de stockage de cette énergie 14, une brique de mesure 16 composée d'un ou plusieurs capteurs de mesure d'une ou plusieurs grandeurs physiques caractéristiques de l'état du palier, une brique de traitement du signal 18 et une brique 20 de transmission d'un diagnostic de l'état du palier. Dans la suite, on supposera à titre illustratif que le palier en question est un palier à roulement logé dans une boîte d'essieu ferroviaire, mais cette application particulière n'a pas nécessairement de caractère limitatif.

La récupération d'énergie peut tirer partie de différentes sources énergétiques présente dans l'environnement direct du capteur, notamment la rotation de l'arbre guidé par le palier ou la température au voisinage direct du palier. D'autres sources d'énergie disponibles, telle que la déformation d'une des bagues du palier ou l'énergie solaire, seraient en théorie envisageables. Le choix retenu doit tenir compte de l'intégration mécanique choisie et du système intégrant le palier à instrumenter.

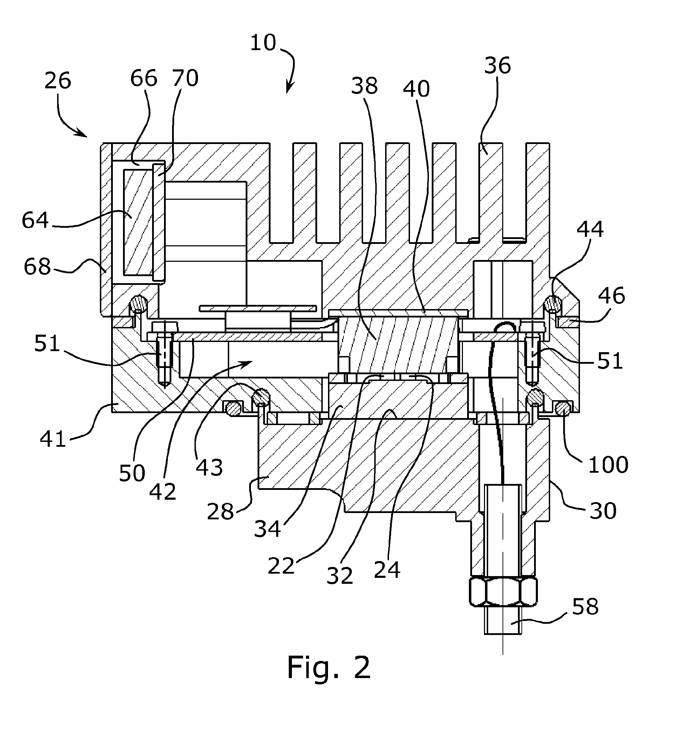

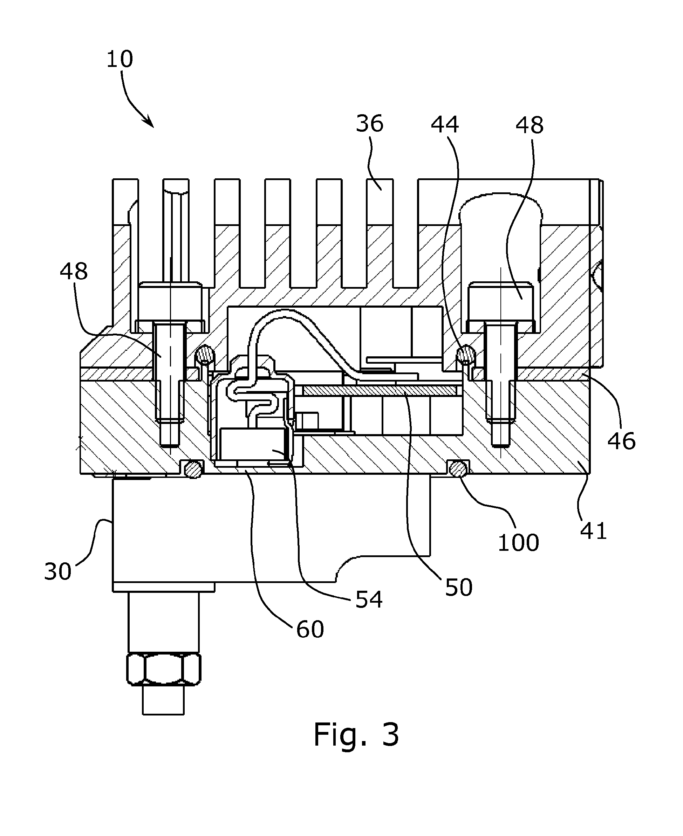

Dans le mode de réalisation illustré plus spécifiquement sur les figures 2 à 5, la brique de récupération d'énergie met en oeuvre au moins un, et ici en l'occurrence deux convertisseurs thermoélectriques 22, 24 placés en parallèle dans un flux thermique, comme représenté schématiquement sur la figure 2. Ces convertisseurs thermoélectriques 22, 24 comportent chacun, de manière connue, une face chaude et une face froide, qu'il convient de placer dans un flux de chaleur pour obtenir l'effet thermoélectrique recherché. Dans la mesure où ces convertisseurs thermoélectriques doivent par ailleurs être protégés mécaniquement de leur environnement potentiellement hostile, ils sont insérés dans un boîtier d'instrumentation 26 permettant ce flux de chaleur. Le boîtier comporte une semelle métallique 28, par exemple en cuivre ou en un alliage à base de cuivre, présentant une face extérieure latérale 30 de couplage thermique exposée à une source de chaleur et une face intérieure 32 en contact et en appui contre une pièce d'adaptation 34 également en cuivre, cette pièce étant directement en contact avec la face chaude du convertisseur thermoélectrique. De préférence, la pièce d'adaptation 34 est fixée à la semelle 28 par des vis 35. Le boîtier comporte également un radiateur de refroidissement à ailettes 36 en alliage d'aluminium, destiné à être placé dans un flux d'air froid, ou du moins relativement froid par rapport à la source chaude. Un chemin thermique est réalisé entre la face froide des convertisseurs thermoélectrique 22, 24 et le radiateur de refroidissement 36 par l'intermédiaire d'une pièce d'adaptation 38 en cuivre et d'un coussin d'adaptation 40.

Le radiateur 36 et la semelle 28 ne viennent pas directement en contact l'un de l'autre, mais sont au contraire séparés par un corps 41 du boîtier, formant avec la semelle 28 et le radiateur 36 une cavité 42 de logement des convertisseurs thermoélectriques 22, 24, fermée d'un côté par le radiateur 36 et de l'autre par la semelle 28. De préférence, le corps 41 est constitué d'un matériau thermiquement isolant et constitue un joint thermique isolant le radiateur de la semelle. Il peut également s'agir d'un matériau thermiquement conducteur, auquel cas un joint thermique spécifique doit impérativement être prévu entre le corps 41 et le radiateur 36, et/ou entre le corps 41 et la semelle 28.

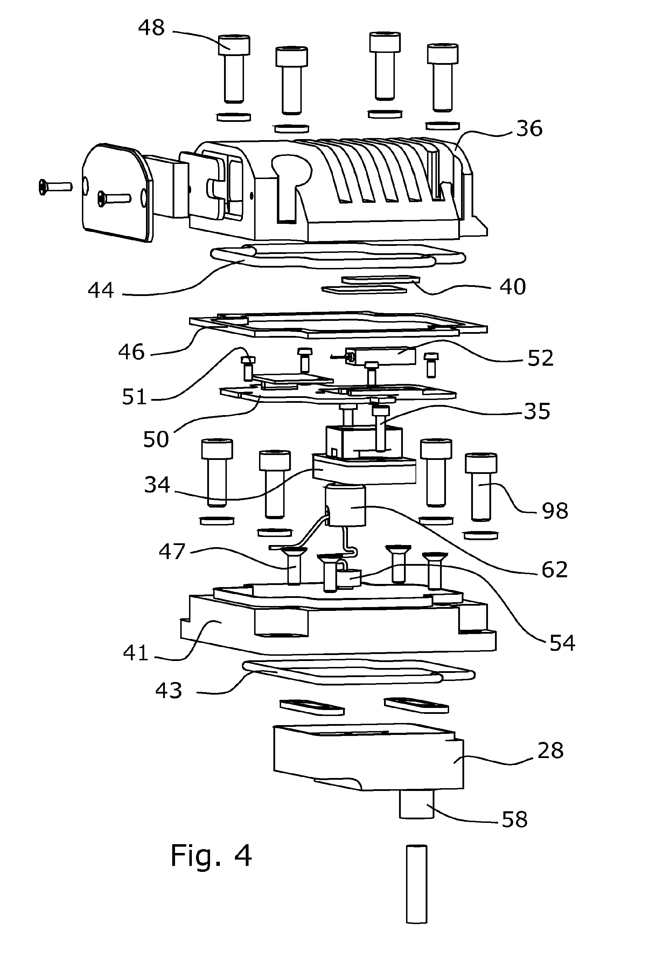

La semelle 28 est fixée au corps 41 de préférence par des vis de fixation 47, visibles sur la figure 4. Le radiateur 36 est de préférence monté sur le corps à l'aide de vis de fixation 48. Dans l'exemple de réalisation, et pour tenir compte des contraintes mécaniques importantes de l'application envisagée pour équiper une boîte d'essieu ferroviaire, on prévoit un corps en acier inoxydable, la semelle étant réalisée en cuivre et le radiateur en aluminium. Des joints d'étanchéité 43, 44 sont prévus d'une part entre la semelle 28 et le corps 41, et d'autre part entre le corps 41 et le radiateur 36. Une plaque rigide en matériau thermiquement isolant 46 est également prévue entre le corps et le radiateur pour y constituer un joint thermique. Pour éviter une quelconque oxydation de la semelle 28, le corps en acier inoxydable 41 enveloppe et recouvre complètement la semelle 28 sur toutes les faces autres que la face de couplage thermique.

Lors de l'assemblage du boîtier d'instrumentation 26, les convertisseurs thermoélectriques se trouvent pris en sandwich entre les pièces d'adaptation 34, 38 et, de manière ultime, entre la semelle 28 et le radiateur 36. Le coussin d'adaptation 40 disposé entre le radiateur 36 et la pièce d'adaptation 38 est déformable et permet de parfaitement maîtriser la pression de contact aux interfaces entre le convertisseur thermoélectrique et les pièces d'adaptation. Dans l'exemple illustré sur les figures, ce coussin d'adaptation 40 est disposé entre le radiateur et l'adaptateur 38 du côté de la face froide des convertisseurs thermoélectriques 22, 24 et le radiateur 36, mais pourrait alternativement être positionné, suivant une variante, entre l'adaptateur 34 du côté de la face chaude des convertisseur thermoélectriques et la semelle 28. On peut également prévoir deux coussins d'adaptation de part et d'autre des convertisseurs thermoélectriques 22, 24, pour protéger à la fois la face froide et la face chaude des convertisseurs thermoélectriques 22, 24. Ces coussins sont en matériau déformable bon conducteur thermique, et présentent des propriétés de surface adaptées aux pièces entre lesquelles ils s'interposent, pour maximiser la surface de contact et minimiser la résistance thermique de contact à chaque interface.

Le boîtier d'instrumentation 26 permet de loger non seulement les convertisseurs thermoélectriques 22, 24, mais également un circuit électrique du module de surveillance 10, matérialisé par une ou plusieurs plaques de circuits imprimés 50 fixées au corps par des vis 51 et incorporant les briques de gestion et de stockage de l'énergie 14, de mesure 16, de traitement du signal 18 et de transmission 20.

Le circuit électrique comporte notamment un circuit de gestion de l'alimentation électrique, relié d'une part aux convertisseurs thermoélectriques 22, 24 et d'autre part à un accumulateur électrochimique 52. L'accumulateur électrochimique 52 peut avantageusement être isolé thermiquement de la semelle et relié thermiquement au radiateur, ceci pour s'assurer que l'accumulateur fonctionne dans une plage de température suffisamment basse. Le circuit de gestion de l'alimentation électrique peut avantageusement inclure un circuit de détermination de l'état de charge de l'accumulateur électrochimique.

Le circuit électrique comporte en outre un circuit d'interrogation de l'état du palier, relié à un ou plusieurs capteurs de grandeurs physiques caractéristiques de l'état du palier, en l'occurrence un capteur d'émission acoustique 54, un capteur de température et le cas échéant un capteur de vitesse 58, voire d'autres capteurs, tels que ceux envisagés dans le document FR 2 944 875, dont la description est ici intégrée par référence.

L'émission acoustique résulte d'une libération d'énergie sous forme d'ondes élastiques transitoires au sein d'un matériau présentant une dégradation irréversible. L'émission acoustique d'une pièce de palier lisse ou de palier à roulement lors de la rotation permet de déterminer les dégradations telles que des fissures ou l'écaillage au niveau de la pièce ou, dans le cas d'un palier lisse, l'état de lubrification ou les possibles arrachements de matière. Il est possible de déterminer, par l'expérience, des signatures spécifiques de ces dégradations. Le capteur d'émission acoustique 54 est constitué par un transducteur piézoélectrique présentant une face de couplage à la pièce à surveiller, et sensible à des vibrations dans le domaine ultrasonore, et particulièrement dans un domaine vibratoire au-delà de 20 kHz. Ce capteur d'émission acoustique 54 est disposé dans le boîtier d'instrumentation 26 du module de surveillance 10 et couplé mécaniquement directement à la semelle 28 ou au corps 41 du boîtier d'instrumentation. Dans le mode de réalisation illustré sur les figures, le capteur d'émission acoustique 54 est plus spécifiquement fixé et accouplé au corps 41 du boîtier, plaqué sur une paroi 60 de faible épaisseur destinée à venir en contact direct avec une paroi de la boîte de palier. Un capot de blindage électromagnétique 62 est prévu pour isoler le capteur d'émission acoustique 54 de perturbations éventuelles.

Le capteur thermométrique est quant à lui positionné au contact de la face chaude de la semelle, directement à proximité de la face chaude du convertisseur thermoélectrique.

Le circuit d'interrogation interroge le capteur thermométrique et le capteur d'émission acoustique 54, et transmet les données à un circuit de traitement du signal. Celui-ci est volontairement peu sophistiqué compte tenu du bilan énergétique du système. On privilégie en effet une simplification de ce traitement pour permettre une fréquence de mesure plus importante. Le circuit de traitement comporte également le stockage des données. Selon le niveau d'émission acoustique mesuré, l'état de fonctionnement du palier est représenté par un indicateur pouvant prendre trois états :
- Vert : le roulement est sain
- Orange : un début d'écaillage est détecté. Il est nécessaire de programmer une opération de maintenance pour le replacer. Celle-ci pourra être réalisée en même temps que la prochaine échéance de maintenance programmée.
- Rouge : l'état d'écaillage est avancé. Il est urgent de changer le palier concerné pour éviter un risque de surchauffe, et de casse éventuelle.

Selon l'état de l'indicateur, il est possible de faire un relevé des mesures enregistrées à la demande pour une analyse plus approfondie.

Le circuit électrique comporte enfin un circuit de transmission par radiofréquence basse consommation relié à une antenne de transmission 64. L'antenne 64 est logée dans une cavité 66 ménagée dans le radiateur. Cette cavité est tournée vers l'extérieur et fermée par un couvercle de protection 68 en matériau transparent aux ondes électromagnétiques. Du fait de la masse métallique constituée par le radiateur 36, la conception de l'antenne 64 est spécifique et tient compte des caractéristiques électromagnétiques du matériau. Une plaque métallique conductrice 70 est interposée entre l'antenne et le radiateur pour constituer un plan de masse permettant d'augmenter les performances de l'antenne.

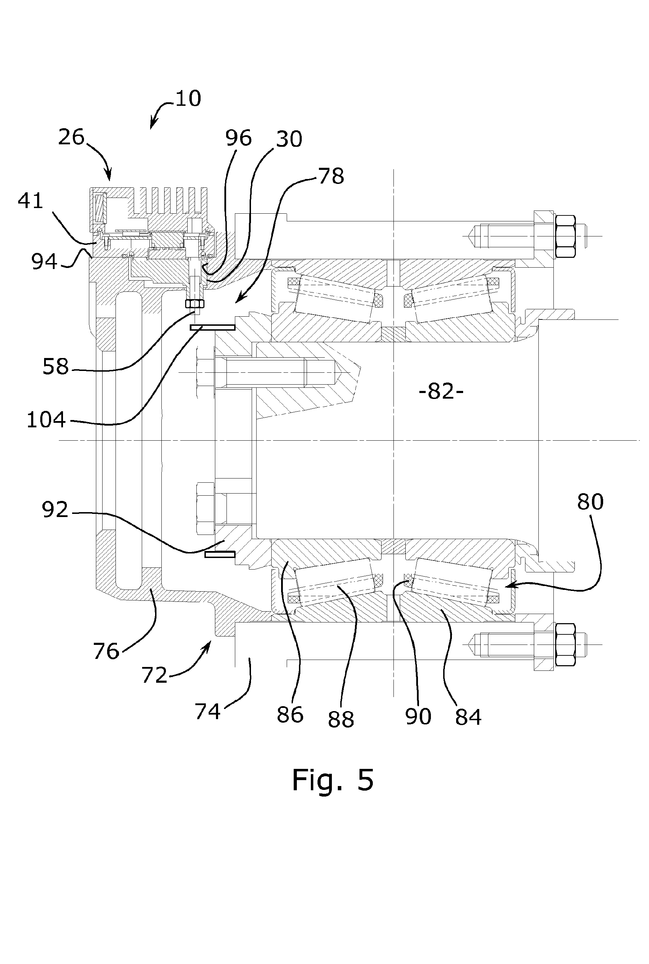

Le module de surveillance 10 ainsi défini peut équiper une boîte de palier, par exemple une boîte d'essieu de véhicule ferroviaire 72 telle qu'illustrée sur la figure 5, constituée d'un corps de boîte 74 fermé par un couvercle de boîte 76, délimitant une cavité étanche 78 de logement d'un palier 80 de guidage d'une fusée d'essieu 82. En l'occurrence, et sans que ceci ait un caractère limitatif, le palier 80 est un palier à roulement, constitué d'une bague extérieure fixe 84 à deux chemins de roulement obliques, de deux bagues intérieures 86 à chemins de roulement obliques et de corps roulants 88, en l'occurrence des rouleaux coniques, maintenus dans des cages 90. La bague extérieure fixe 84 est solidaire du corps 74 de la boîte d'essieu, alors que les bagues intérieures 86 sont emmanchées sur la fusée d'essieu 82 et maintenues en position par un chapeau de fusée 92.

Comme illustré sur la figure, le module de surveillance 10 est positionné dans un renfoncement 94 du couvercle 76, la paroi latérale 30 de couplage thermique de la semelle étant plaquée contre une paroi latérale 96 directement dans la zone de charge du palier 80 94 pour maximiser le transfert de chaleur au travers de cette paroi 96 qui constitue une paroi de couplage thermique. Le corps 41 du boîtier d'instrumentation 26 du module de surveillance 10 est fixé au renfoncement 94 du couvercle par quatre vis 98 (figure 4), de manière à réaliser une bonne pression de contact entre le corps 41 du boîtier d'instrumentation et le couvercle 76 de la boîte d'essieu 72 au niveau du renfoncement 94, qui constitue également une paroi de couplage acoustique. Un joint d'étanchéité 100 est prévu entre le corps 41 du boîtier d'instrumentation et la boîte de palier 72, entourant la semelle 28, pour protéger la semelle 28. De manière remarquable, la paroi de couplage acoustique du renfoncement 94 et la paroi de couplage thermique 96 sont perpendiculaires l'une à l'autre, de sorte que les chaines de cotes puisse être respectées d'une part entre le corps 41 et la paroi de couplage acoustique 94 et d'autre part entre la semelle et la paroi de couplage thermique 96, malgré d'éventuelles tolérances de montage entre le corps 41 et la semelle 28.

Le capteur de vitesse 58 traverse la paroi du renfoncement par un orifice, pour pénétrer à l'intérieur 78 de la boîte d'essieu, en regard et à distance d'entrefer d'un codeur 104 solidaire de l'équipage tournant, par exemple du chapeau de fusée 92, ou d'une des bagues intérieures tournantes 86 du palier. Le codeur 104 en question est un codeur de type dit « top tour », qui permet de détecter un ou deux changements d'état à chaque tour. Cette information est suffisante, car le capteur de vitesse 58 est essentiellement utilisé pour gérer l'énergie du circuit électrique de manière à minimiser la consommation énergétique et pour le diagnostic de l'état du palier, qui ne nécessite pas une connaissance très précise de la vitesse.

Tant que la vitesse de l'essieu est inférieure à un seuil de vitesse de mise hors veille, correspondant par exemple dans l'application ferroviaire considérée à une vitesse de l'ordre de 80 km/heures pour le véhicule ferroviaire en question, le circuit électrique reste en veille profonde, la consommation électrique étant très faible ou nulle. Lorsque la vitesse de l'essieu 82 dépasse un seuil donné, la tension aux bornes du capteur de vitesse 58 fait sortir le circuit électrique sort de son état de veille, de sorte qu'un cycle de surveillance peut commencer.

Inversement, lorsque la vitesse de l'essieu 82 décroit sous un deuxième seuil prédéterminé, éventuellement égal au premier seuil, et y reste pendant une durée supérieure à un temps prédéterminé, le circuit électrique entre dans l'état de veille profonde.

Naturellement, diverses variantes sont envisageables.

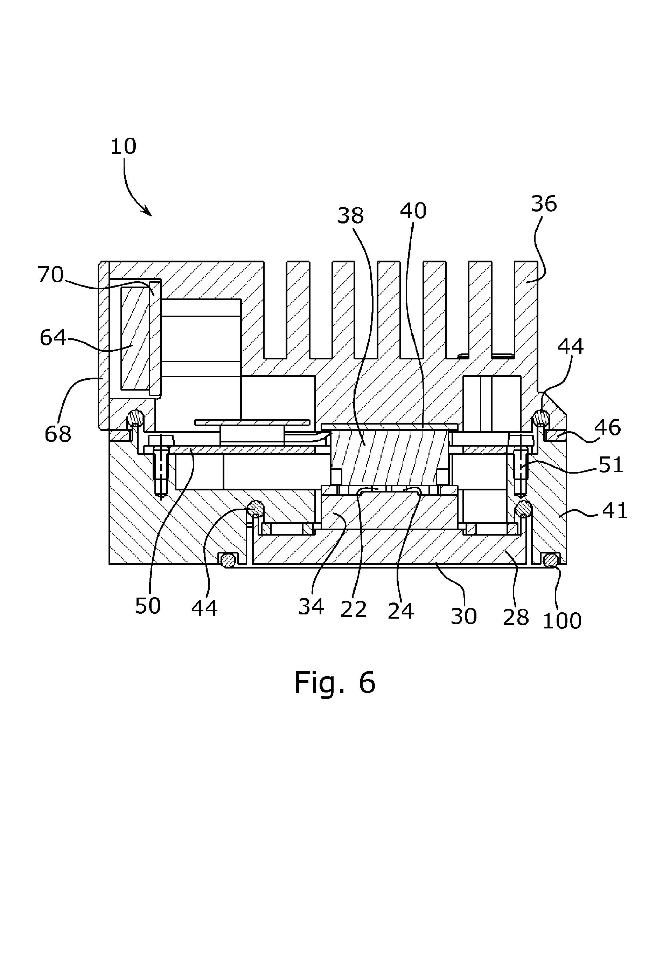

Sur la figure 6 est représentée une variante sans capteur de vitesse. On peut alors envisager différentes stratégies de minimisation de l'énergie consommée par le module :
- il est possible de ne prévoir des interrogations espacées dans le temps, par exemple une fois par jour ;
- si d'autres capteurs sont présents dans le module, il est également possible de prévoir un circuit de réveil en fonction d'un signal suffisamment énergétique délivré par l'un de ces capteurs et caractéristique de la rotation du palier, par exemple un signal de température ou une valeur RMS de vibration mesurée.

Le module de surveillance 10 est adaptable non seulement à des boîtes d'essieux mais également à d'autres type de boîtes de palier à roulement ou de palier lisses, notamment pour éolienne ou pour des machines industrielles, dans des applications où l'on constate un échauffement suffisant du palier et une différence de température importante entre l'intérieur de la boîte de palier et le milieu externe.

Le boîtier peut être constitué sans corps, le radiateur étant alors fixé à la semelle, avec interposition d'un joint thermique.

Le capteur de vitesse 58 peut être mis à profit comme source d'énergie électrique auxiliaire ou principale du module de surveillance 10. Pour ce faire, le capteur de vitesse 58 doit être associé à un anneau codeur multipolaire présentant un grand nombre de pôles, par exemple 32 pôles par tour, pour générer un courant alternatif servant à alimenter le circuit électrique et l'accumulateur 52.

Les pièces d'adaptation 34, 38, ou au moins l'une d'entre elles, peuvent être omises.

Le nombre de convertisseurs thermiques et leur disposition thermiquement en série et/ou en parallèle, et électriquement en série et/ou en parallèle, peuvent être déterminés de façon différente pour chaque application, en fonction notamment des contraintes de volume, du différentiel thermique disponible en source chaude et source froide et/ou de la gamme de tension à générer pour être compatible avec l'accumulateur électrochimique.

Le circuit de transmission peut être purement passif, de manière à ce que l'antenne 64 serve également à la captation de l'énergie électromagnétique émise par une antenne de lecture disposée à distance, cette énergie servant au circuit de transmission pour transmettre l'information sur l'état du palier surveillé.

La description ci-dessus se transpose également à un système de guidage linéaire.

## Revendications

1. Module de surveillance (10) d'au moins une grandeur physique caractéristique de l'état d'un organe de guidage par contact (80), comportant :
- au moins un capteur d'état (54, 58) pour fournir un signal électrique de mesure de la grandeur physique,
- un circuit électrique comportant :
- un circuit d'interrogation du capteur d'état relié au capteur d'état, et
- un circuit d'alimentation électrique du dispositif de surveillance,
**caractérisé en ce que** le circuit électrique comporte un circuit d'économie d'énergie relié à un capteur de déplacement (58) de l'organe de guidage (80) et apte à mettre le circuit d'interrogation hors veille lorsqu'une grandeur physique caractéristique du mouvement de l'organe de guidage (80) mesurée par le capteur de déplacement (58) est supérieure à une seuil prédéterminé pendant un temps prédéterminé.

2. Module de surveillance (10) selon la revendication 1, **caractérisé en ce que** le circuit d'alimentation électrique comporte un accumulateur électrochimique (52).

3. Module de surveillance (10) selon la revendication 1 ou la revendication 2, **caractérisé en ce que** le circuit d'alimentation électrique comporte au moins un transducteur (22, 24, 58) apte à transformer en énergie électrique une énergie cinétique et/ou thermique émise par l'organe de guidage (80).

4. Module de surveillance (10) selon la revendication 3, **caractérisé en ce que** le ou les transducteurs incluent au moins un convertisseur thermoélectrique (22, 24) présentant d'une part une face chaude reliée par conduction thermique à une semelle (28) du module de surveillance (10) en contact avec une paroi (96) de l'organe de guidage (72) ou traversant une paroi de l'organe de guidage et d'autre part une face froide reliée par conduction thermique à un radiateur de refroidissement (36).

5. Module de surveillance (10) selon l'une quelconque des revendications 1 à 3, **caractérisé en ce que** l'organe de guidage par contact (80) est un palier (80) logé dans une boîte de palier (72).

6. Module de surveillance (10) selon la revendication 5 et la revendication 3, **caractérisé en ce que caractérisé en ce que** le ou les transducteurs incluent au moins un convertisseur thermoélectrique (22, 24) présentant d'une part une face chaude reliée par conduction thermique à une semelle (28) du module de surveillance (10) en contact avec une paroi (96) de la boîte de palier (72) ou traversant une paroi de la boîte de palier et plongée à l'intérieur de la boîte de palier et d'autre part une face froide reliée par conduction thermique à un radiateur de refroidissement (36).

7. Module de surveillance (10) selon l'une quelconque des revendications précédentes, **caractérisé en ce que** le capteur de déplacement (58) est relié au circuit d'alimentation de telle manière que lorsque l'organe de guidage (80) tourne, le capteur de déplacement (58) génère un signal qui alimente en énergie le circuit d'alimentation.

8. Module de surveillance (10) selon l'une quelconque des revendications 1 à 7, **caractérisé en ce que** la grandeur physique caractéristique du mouvement de l'organe de guidage (80) mesurée par le capteur de déplacement (58) est une température, une vibration, une émission acoustique ou une vitesse.

9. Module de surveillance (10) selon l'une quelconque des revendications précédentes, **caractérisé en ce que** le module de surveillance (10) comporte en outre une antenne (64) de transmission radioélectrique et un circuit électrique de transmission relié à l'antenne.

10. Module de surveillance (10) selon la revendication 9, **caractérisé en ce que** le circuit électrique de transmission est apte à être alimenté en énergie par l'antenne (64) placée dans un champ électromagnétique d'un dispositif émetteur-récepteur distant.

11. Module de surveillance (10) selon l'une quelconque des revendications précédentes, **caractérisé en ce que** le ou les capteurs d'état incluent un capteur d'émission acoustique (54) apte à détecter les ondes élastiques transitoires résultant de micro-déplacements locaux internes de l'organe de guidage (80).

12. Boîte de palier (72), notamment boîte d'essieu, comportant :
- un corps de boîte de palier (74) délimitant une cavité (78) pour loger un palier (80) pour le guidage d'un élément tournant (82), notamment une fusée d'essieu, et
- un couvercle de boîte de palier (76) fermant la cavité (78), **caractérisée en ce que** la boîte de palier est équipé d'un module de surveillance (10) selon l'une quelconque des revendications précédentes, pour la surveillance d'au moins une grandeur physique caractéristique de l'état du palier (80), le capteur d'état (54) étant disposé à l'extérieur de la boîte de palier (72), le capteur de déplacement (58) du palier pénétrant à l'intérieur de la cavité (78) par une ouverture d'une paroi du corps de boîte de palier (74) ou du couvercle de boîte de palier (76).

13. Procédé de gestion de l'alimentation électrique d'un module de surveillance (10) d'au moins une grandeur physique caractéristique de l'état d'un palier (80) logé dans une boîte de palier (72), **caractérisé en ce que** :
- l'on charge un accumulateur électrochimique (52) avec au moins un générateur thermoélectrique (22, 24),
- on alimente un circuit d'interrogation d'un capteur d'état (54, 58) pour mesurer la grandeur physique lorsque la vitesse de déplacement du palier est supérieure un premier seuil prédéterminé pendant un temps prédéterminé;
- on cesse d'alimenter au moins le circuit d'interrogation lorsque la vitesse de déplacement du palier est inférieure à un deuxième seuil prédéterminé pendant un temps donné.
